# EUROPÄISCHE PATENTANMELDUNG

(11) **EP 4 449 844 A1**
(43) Veröffentlichungstag der Anmeldung: **23.10.2024**
(21) Anmeldenummer: 24157353.4
(22) Anmeldetag: 13.02.2024
(51) Int. Cl.: A01B 79/00, A01D 91/04

(54) **LANDWIRTSCHAFTLICHES SYSTEM**

(30) Priorität: 18.04.2023 DE 102023109733
(71) Anmelder: CLAAS Saulgau GmbH, 88340 Bad Saulgau (DE)
(72) Erfinder: MÜMKEN, Philipp, 88400 Biberach an der Riß (DE); FISCHER, Josef, 88400 Biberach (DE); REINHARDT, Martin, 88367 Hohentengen (DE); SCHMID, Christian, 88696 Owingen (DE); RUPP, Magnus, 73494 Rosenberg (DE); PFLANZE, Sascha, 88348 Bad Saulgau (DE); MOCK, Andreas, 88284 Wolpertswende (DE); OBER, Martin, 78736 Trichtingen (DE); OLDENBURG, Joachim, 33428 Harsewinkel (DE); FUGUNT, Michael, 88410 Bad Wurzach (DE); THIESMANN, Waldemar, 49080 Osnabrück (DE); BECKER, Michael, 88367 Hohentengen (DE); Monkenbusch, Robin, 33378 Rheda-Wiedenbrück (DE)
(74) Vertreter: Budach, Steffen

(57) **Zusammenfassung**

Die vorliegende Erfindung betrifft ein landwirtschaftliches System (1) zur Ausführung einer Futtermittelernteprozesskette (13), umfassend:
- zumindest eine landwirtschaftliche Arbeitsmaschine (31) zur Durchführung eines spezifischen Teilbearbeitungsprozesses (2) eines Gesamtbearbeitungsprozesses der Futtermittelernteprozesskette (13),
- ein jeder Arbeitsmaschine (31) zugeordnetes Assistenzsystem (32a ... 32n) zur Ansteuerung der jeweiligen Arbeitsmaschine (31),
wobei das jeweilige Assistenzsystem (32a ... 32n) mit der jeweiligen zur Durchführung der Teilbearbeitungsprozesse (2) vorgesehenen Arbeitsmaschine (31) und/oder deren Arbeitsorganen jeweils einen eigenständig arbeitenden Regelautomaten (45a ... 45n) bildet, welcher der Optimierung der Ansteuerung der jeweiligen Arbeitsmaschine (31) zur Durchführung des spezifischen Teilbearbeitungsprozesses (2) dient, wobei das System (1) einen Prozesssupervisor (47) als übergeordnete Regelungseinheit der Regelautomaten (45a ... 45n) umfasst, welcher die einzelnen Regelautomaten (45a ... 45n) ansteuert und dass die Assistenzsysteme (32a ... 32n) der Regelautomaten (45a ... 45n) zum Datenaustausch untereinander durch ein Kommunikationsmittel (48) mit dem Prozesssupervisor (47) verbunden sind.

## Beschreibung

Die vorliegende Erfindung betrifft ein landwirtschaftliches System zur Ausführung einer Futtermittelernteprozesskette gemäß dem Oberbegriff des Anspruches 1. Weiterhin ist ein Verfahren zum Betreiben eines landwirtschaftlichen Systems zur Ausführung einer Futtermittelernteprozesskette gemäß dem Oberbegriff des Anspruches 15 Gegenstand der Erfindung.

Aus der EP 3 314 997 B1 ist ein Erntemanagementsystem bekannt geworden, welches mittels geeigneter Sensoren die Feuchte eines zu erntenden Futterbestandes überwacht und in Abhängigkeit von der detektierten Gutfeuchte nachgeordnete Ernteprozessschritte regelt. Im Einzelnen ist dort offenbart, dass in Abhängigkeit von der detektierten Gutfeuchte das sogenannte Zetten oder Wenden des auf dem Feld abgelegten Erntegutes gesteuert wird. Zudem ist beschrieben, dass das geerntete Gut erst ab einer bestimmten Feuchtigkeit mittels Ballenpressen geerntet und in Ballen verpresst wird. Ein derartiges System hat zumindest den Vorteil, dass einzelne Schritte eines Futterernteprozesses in Abhängigkeit von der detektierten Gutfeuchte gesteuert werden können. Nachteilig ist, dass ein vollständiger Futterernteprozess deutlich komplexer ist und eine Regelung von einzelnen Arbeitsschritten eines Futterernteprozesses in Abhängigkeit allein von der Feuchte des zu erntenden Gutes nicht sicherstellt, dass das Erntegut eine ausreichend hohe, für die Einlagerung geeignete Erntequalität hat.

Die DE 20 2019 000 311 U1 beschreibt ein System zur Kontrolle des Trockenmassegehalts von Feldfrüchten bei mehrstufigen Ernteverfahren während ihrer Einbringung vom Feld. Dazu wird ein zu erwartender Trockenmassegehalt in Abhängigkeit von Prozessstufen und Bearbeitungsintensitäten abgeschätzt. Es wird auch beschrieben, dass verschiedenste Randbedingungen bei der Abschätzung des Trockenmassegehaltes berücksichtigt werden und Solleinstellungen von Aufbereitungsorganen ermittelt und zwischen verschiedensten Arbeitsmaschinen ausgetauscht werden. Auch der DE 20 2019 000 311 U1 haftet das Problem an, dass ausschließlich die Trockenmasse, das Pendant zur Gutfeuchte, überwacht und zur Steuerung eines Futterernteprozesses genutzt wird.

Es ist deshalb Aufgabe der Erfindung die beschriebenen Nachteile des Standes der Technik zu vermeiden und insbesondere ein landwirtschaftliches System zur Ausführung einer Futtermittelernteprozesskette vorzuschlagen, welches die komplexen Zusammenhänge eines Futterernteprozesses besser berücksichtigt und sicherstellt, dass ein qualitativ hochwertiges, für die Einlagerung geeignetes und einen hohen Energiegehalt aufweisendes Erntegut erzeugt wird.

Diese Aufgabe wird erfindungsgemäß durch die Merkmale des unabhängigen Patentanspruchs 1 gelöst, wobei vorteilhafte Weiterbildungen des erfindungsgemäßen landwirtschaftlichen Systems Gegenstand der entsprechenden abhängigen Patentansprüche 2 bis 14 sind. Weiterhin wird die Aufgabe durch ein Verfahren zum Betreiben eines landwirtschaftlichen Systems mit den Merkmalen des nebengeordneten Anspruchs 15 gelöst.

Gemäß dem Anspruch 1 wird ein landwirtschaftliches System zur Ausführung einer Futtermittelernteprozesskette vorgeschlagen. Das System umfasst zumindest eine landwirtschaftliche Arbeitsmaschine zur Durchführung eines spezifischen Teilbearbeitungsprozesses eines Gesamtbearbeitungsprozesses der Futtermittelernteprozesskette, ein jeder Arbeitsmaschine zugeordnetes Assistenzsystem zur Ansteuerung der jeweiligen Arbeitsmaschine, welches einen Speicher zum Hinterlegen von Daten und eine Rechenvorrichtung zur Verarbeitung der im Speicher hinterlegten Daten aufweist. Erfindungsgemäß ist vorgesehen, dass das jeweilige Assistenzsystem mit der jeweiligen zur Durchführung der Teilbearbeitungsprozesse vorgesehenen Arbeitsmaschine und/oder deren Arbeitsorganen jeweils einen eigenständig arbeitenden Regelautomaten bildet, welcher der Optimierung der Ansteuerung der jeweiligen Arbeitsmaschine zur Durchführung des spezifischen Teilbearbeitungsprozesses dient, wobei das System einen Prozesssupervisor als übergeordnete Regelungseinheit der Regelautomaten umfasst, welcher die einzelnen Regelautomaten ansteuert und dass die Assistenzsysteme zum Datenaustausch der Regelautomaten untereinander durch ein Kommunikationsmittel mit dem Prozesssupervisor verbunden sind. Der Prozesssupervisor steuert in Abhängigkeit vom Informationsgehalt des Datenaustauschs die einzelnen Regelautomaten an.

Der Erfindung liegt die Überlegung zugrunde, dass die Assistenzsysteme und Arbeitsmaschinen, welche die jeweiligen Regelautomaten bilden und die zur Durchführung spezifischer Teilbearbeitungsprozesse des Gesamtbearbeitungsprozesses zur Ausführung der Futtermittelernteprozesskette beitragen, durch den als übergeordnete Regelungseinheit der Regelautomaten ausgeführten Prozesssupervisor angesteuert werden. Indem die Assistenzsysteme zum Datenaustausch der Regelautomaten untereinander durch ein Kommunikationsmittel mit dem Prozesssupervisor verbunden sind, wird es dem Prozesssupervisor ermöglicht, im Verlauf der Ausführung der Futtermittelernteprozesskette von den Regelautomaten der zumindest einen den jeweiligen Teilbearbeitungsprozess ausführenden Arbeitsmaschine Informationen zu empfangen und auszuwerten, welche für die Ausführung eines nachfolgenden Teilbearbeitungsprozesses relevant sind. Dem Prozesssupervisor kommt die Aufgabe zu, den durch das landwirtschaftliche System durchzuführenden Gesamtbearbeitungsprozess zu optimieren, indem der Prozesssupervisor gezielt auf die Regelautomaten der jeweiligen an einem, insbesondere nachfolgenden, Teilbearbeitungsprozess teilnehmenden Arbeitsmaschine Einfluss nimmt. Der Prozesssupervisor koordiniert die einzelnen, insbesondere aufeinander aufbauenden, Teilbearbeitungsprozesse unter Berücksichtigung der zwischenzeitlichen Arbeitsergebnisse.

Für die Durchführung eines spezifischen Teilbearbeitungsprozesses ist der Einsatz einer auf diesen Teilbearbeitungsprozess abgestimmten Arbeitsmaschine oder eine Arbeitsmaschine mit auf den Teilbearbeitungsprozess abgestimmten Arbeitsorganen vorgesehen. Im letzteren Fall kann dieselbe Arbeitsmaschine mit verschiedenen daran anbringbaren Arbeitsorganen zum Einsatz kommen.

Insbesondere kann der Prozesssupervisor dazu eingerichtet sein, den Gesamtbearbeitungsprozess des Systems gemäß einer hinterlegten oder hinterlegbaren Prozessstrategie durch eine aufeinander abgestimmte Ansteuerung einzelner oder aller Regelautomaten autonom zu optimieren. Durch die Prozessstrategie sind optimierte Arbeitsparameter und optimierte Teilbearbeitungsprozesse in Abhängigkeit von einem Futterernteprozess beschreibenden Qualitätsparametern ermittelbar und die Qualitätsparameter sind strategieabhängig vorgegeben oder vorgebbar. Hierdurch ist es dem Prozesssupervisor möglich, während des laufenden Gesamtbearbeitungsprozess auftretende äußere Einflüsse, beispielsweise Umweltparameter, bei der abgestimmten Ansteuerung einzelner oder aller Regelautomaten zu berücksichtigen, die Einfluss auf Erlangung und Einhaltung die Qualitätsparameter haben.

Bevorzugt können zur Durchführung eines jeweiligen Teilbearbeitungsprozesses mehrere unterschiedliche Strategien hinterlegt oder hinterlegbar sein, welche der jeweilige Regelautomat der jeweiligen Arbeitsmaschine, die zur Durchführung des jeweiligen Teilbearbeitungsprozesses ausgeführt und eingerichtet ist, heranzieht. Strategien können Vorgaben für die einzelnen Regelautomaten für Grenzen von Bewertungsgrößen und/oder Einstellgrößen, Gewichtungen, Zielwerten und/oder Prioritäten sein.

Gemäß einer bevorzugten Weiterbildung kann zur Steuerung einer Aktivierung und Ansteuerung einzelner Regelautomaten und/oder eines Datenaustauschs zumindest einzelner Regelautomaten untereinander durch den Prozesssupervisor zumindest eine Regelung hinterlegt sein, welche bestehende Abhängigkeiten zwischen Einstellparametern und Qualitätsparametern der verschiedenen Teilbearbeitungsprozesse untereinander umfasst. Bevorzugt kann die zumindest eine Regelung in einem Speicher des Prozesssupervisors hinterlegt sein. Die zumindest eine Regelung kann auf Grundlage eines Regelwerkes oder einer Reglerstruktur erfolgen.

Insbesondere kann der Prozesssupervisor zur autonomen Vorgabe von Einstellgrenzen eingerichtet sein, innerhalb derer der jeweilige Regelautomate die jeweilige Arbeitsmaschine ansteuert.

Alternativ oder zusätzlich kann der Prozesssupervisor zur autonomen Vorgabe von Zielwerten der Qualitätsparameter eingerichtet sein, innerhalb derer der jeweilige Regelautomat die jeweilige Arbeitsmaschine ansteuert.

Bevorzugt kann zur Abbildung funktionaler Zusammenhänge eines von einer der Arbeitsmaschinen durchzuführenden Teilbearbeitungsprozesses dem mindestens einen Qualitätsparameter zumindest ein adaptives Kennlinienfeld zugeordnet sein, wobei dieser mindestens eine Qualitätsparameter als Ausgangsgröße des zumindest einen Kennfeldes definiert ist. Dabei kann der mindestens eine Qualitätsparameter als Ausgangsgröße eines vorangehenden Teilbearbeitungsprozesses eine Eingangsgröße des nachfolgenden Teilbearbeitungsprozesses bilden.

Insbesondere können die von dem Prozesssupervisor angesteuerten Regelautomaten als Mähmaschinenautomaten, Wendemaschinenautomaten, Schwadmaschinenautomaten, Erntemaschinenautomaten, Transportfahrzeugautomaten und Ballenpressenautomaten ausgeführt und eingerichtet sein. Der Begriff Mähmaschinenautomat definiert das regelbasierte Zusammenwirken einer landwirtschaftlichen Arbeitsmaschine, insbesondere eines Traktors, und einer daran angeordneten Mähvorrichtung mit dem der Arbeitsmaschine zugeordneten Assistenzsystem. Der Begriff Wendemaschinenautomat definiert das regelbasierte Zusammenwirken der landwirtschaftlichen Arbeitsmaschine, insbesondere des Traktors, und einer daran angeordneten Wendevorrichtung mit dem der Arbeitsmaschine zugeordneten Assistenzsystem. Der Begriff Schwadmaschinenautomat definiert das regelbasierte Zusammenwirken der landwirtschaftlichen Arbeitsmaschine, insbesondere des Traktors, und einer daran angeordneten Schwadvorrichtung mit dem der Arbeitsmaschine zugeordneten Assistenzsystem. Der Begriff Erntemaschinenautomat definiert das regelbasierte Zusammenwirken einer als selbstfahrende landwirtschaftliche Erntemaschine ausgeführten Arbeitsmaschine, insbesondere eines Mähdreschers oder Feldhäckslers, und einem daran angeordneten Vorsatzgerät mit dem der Erntemaschine zugeordneten Assistenzsystem. Der Begriff Transportfahrzeugautomat definiert das regelbasierte Zusammenwirken eines Transportfahrzeugs und/oder eines von der Arbeitsmaschine mitgeführten Transportwagens mit dem Transportfahrzeug und/oder der Arbeitsmaschine zugeordneten Assistenzsystem. Der Begriff Ballenpressenautomat definiert das regelbasierte Zusammenwirken einer Arbeitsmaschine und einer Ballenpresse mit dem der Ballenpresse zugeordneten Assistenzsystem. Dabei ist das jeweilige Assistenzsystem automatenspezifisch ausgeführt und eingerichtet, d.h. auf den durch die jeweilige Arbeitsmaschine durzuführenden Teilbearbeitungsprozess spezialisiert.

Gemäß einer bevorzugten Weiterbildung kann der Prozesssupervisor zumindest eine Bedieneinrichtung umfassen, wobei die Bedieneinrichtung von zumindest einer Eingabe- und Anzeigeeinheit und einer Speicher- und Datenverarbeitungseinheit gebildet ist, wobei die Bedieneinrichtung einer oder mehreren der landwirtschaftlichen Arbeitsmaschinen und/oder einer stationären Einheit zugeordnet sein kann. Hierdurch kann sichergestellt werden, dass eine Vielzahl von die Futtermittelernteprozesskette durchführenden landwirtschaftlichen Arbeitsmaschinen in den zu optimierenden Futterernteprozess eingebunden werden können und zudem eine einfache Nutzung des Assistenzsystems möglich wird.

Ein qualitativ hochwertiges Optimierungsergebnis im Verlauf der Futtermittelernteprozesskette wird in einer vorteilhaften Ausgestaltung auch dadurch sichergestellt, dass die zumindest eine Bedieneinrichtung Daten aus internen und/oder externen Datenquellen bezieht und dass vorzugsweise zumindest die der jeweiligen Bedieneinrichtung zugeordnete Speicher- und Datenverarbeitungseinheit in Teilen oder vollständig einer Datencloud zugeordnet ist. Einerseits hat eine derartige Struktur den Vorteil, dass die Optimierung auf eine Vielzahl von Daten gestützt werden kann und andererseits wird trotz der Vielzahl verfügbarer Daten die Rechenleistung der Assistenzsysteme und des Prozesssupervisors nicht überfordert.

Bevorzugt können die Teilbearbeitungsprozesse des Futtermittelernteprozesses einen oder mehrere Prozessschritte aus der Gruppe Entscheidung Erntestart, Mähen des Erntegutes, Wenden des Erntegutes, Schwaden des Erntegutes, Schwadernte mittels Feldhäcksler, Schwadernte mittels Ballenpresse, Schwadernte mittels Ladewagen, Aufsammeln und Abtransport von Erntegutballen sowie die Einlagerung von Erntegut umfassen.

In einer vorteilhaften Ausgestaltung ist der Prozesssupervisor so beschaffen, dass der zu optimierende Futtermittelernteprozess als landwirtschaftliche Arbeitsaufgabe beschrieben wird und die Beschreibung der landwirtschaftlichen Arbeitsaufgabe die erforderlichen Teilbearbeitungsprozessschritte und die Reihenfolge ihrer Abarbeitung umfasst, wobei die Reihenfolge der Abarbeitung der Teilbearbeitungsprozessschritte die Futtermittelernteprozesskette bildet. Eine derartige Struktur hat insbesondere den Vorteil, dass die durchzuführenden Optimierungsmaßnahmen durch die Ansteuerung der Assistenzsysteme durch den Prozesssupervisor auf einfache Weise abgebildet und sodann eine strukturierte Optimierung der Futtermittelernteprozesskette umgesetzt werden kann.

Weiter bevorzugt können die landwirtschaftlichen Arbeitsmaschinen des Systems in Abhängigkeit von den jeweils erforderlichen Teilbearbeitungsprozessen Mähmaschinen, vorzugsweise Mähwerke, Heuwerbungsmaschinen, vorzugsweise Heuwender, Schwadmaschinen, vorzugsweise Schwader, Erntemaschinen, vorzugsweise Feldhäcksler, Ballenpressen und/oder Ladewagen, Transportfahrzeuge, vorzugsweise Traktoren, Transportwagen, Pritschenwagen, Hubstapler und Verdichtungsfahrzeuge sein, und das System kann Einlagerungsmedien für das Erntegut umfassen, insbesondere Silos und in Gestalt von Erntegutballen. Eine große Flexibilität in der Optimierung der Futtermittelernteprozesskette ergibt sich daraus, dass der Prozesssupervisor so beschaffen ist, dass dieser den Einsatz der unterschiedlichsten landwirtschaftlichen Arbeitsmaschinen optimieren kann.

Insbesondere können die Assistenzsysteme dazu eingerichtet sein, die in den Assistenzsystemen hinterlegten Strategien zur Auswahl vorzuschlagen und/oder das Strategien durch eine Bedienperson vorgebbar sind, wobei die hinterlegten Strategien auf den jeweiligen Verwendungszweck des Erntegutes gerichtet sind. Hierdurch lässt sich die Einsatzflexibilität der Assistenzsysteme erhöhen.

In einer vorteilhaften Ausgestaltung der Erfindung ist das jeweilige durch den Prozesssupervisor angesteuerte Assistenzsystem so beschaffen, dass die Verwendungszwecke der hinterlegten Strategien einen oder mehrere der Verwendungszwecke Biogasgewinnung aus erntefrischem oder siliertem Erntegut, Tierfütterung aus erntefrischem oder siliertem Erntegut, wobei die Tierfütterung insbesondere nach Rindermast und die Milchgewinnung differenziert wird, Einlagerung des Ernteguts als Heu, umfassen. Auf diese Weise wird sichergestellt, dass die Optimierung der Futtermittelernteprozesskette anwendungsfallspezifisch so qualitätsgerecht wie notwendig und nicht wie möglich durchgeführt wird, was letztendlich Ressourcen einspart und Kosten senkt.

Eine qualitativ hochwertige Optimierung der Futtermittelernteprozesskette in Abhängigkeit von dem Verwendungszweck des Erntegutes wird in einer vorteilhaften Ausgestaltung der Erfindung dann erreicht, wenn jede der Strategien zumindest einen der Qualitätsparameter umfasst, wobei jeder der Qualitätsparameter das Arbeitsergebnis der jeweiligen Futterernteprozesskette definiert und eines oder mehrere der Qualitätskriterien
- Kraftstoffbedarf, vorzugsweise ein minimaler Kraftstoffbedarf,
- Durchsatz, vorzugsweise ein maximaler Durchsatz,
- Gesamtkosten, vorzugsweise minimale Gesamtkosten,
- Erntegutqualität, vorzugsweise eine maximale Erntegutqualität,
- Erntegutverlust, vorzugsweise ein minimaler Erntegutverlust,
- Energiegehalt des Erntegutes, vorzugsweise ein maximaler Energiegehalt,
- Verschmutzungsgrad, vorzugsweise ein minimaler Verschmutzungsgrad,
- Feuchte des Erntegutes, vorzugsweise eine an den Verwendungszweck angepasste optimierte Feuchte,
- Erntegutertrag, vorzugsweise ein maximaler Erntegutertrag umfasst.

Die Einhaltung der optimierbaren Qualitätsparameter wird im einfachsten Fall dadurch erreicht, dass in einer vorteilhaften Weiterbildung der Erfindung Grenzwerte für die Qualitätsparameter und/oder den Qualitätsparametern zugeordnete Qualitätskriterien definiert werden und die Grenzwerte in dem jeweiligen Assistenzsystem hinterlegt sind oder an dieses durch den Prozesssupervisor übergeben werden.

In einer vorteilhaften Ausgestaltung der Erfindung kann der Verwendungszweck der hinterlegten Strategien auf die Verwendung des Erntegutes als erntefrisches Erntegut oder als Silage für die Biogasgewinnung gerichtet sein, wobei der Qualitätsparameter das Qualitätskriterium Feuchte umfasst und für die Feuchte ein Wertebereich von 55 % bis 70 % vorgegeben ist, ein Arbeitsparameter die Schnittlänge des Erntegutes ist und die Schnittlänge in einem Bereich von 40 mm bis 70 mm liegt, ein Arbeitsparameter der Schnittzeitpunkt ist und der Schnittzeitpunkt so gewählt wird, dass eine hohe Energiekonzentration im Erntegut erreicht wird, eine hohe Verdichtung des Erntegutes möglich und die Vermeidung von Fehlgärungen erreicht wird, ein Arbeitsparameter die Schnitthöhe des Mähwerks umfasst und die Schnitthöhe in einem Bereich von 50 mm bis 80 mm vorgeschlagen wird, wird sichergestellt, dass das Erntegut eine für die Biogasgewinnung optimale Qualität aufweist, die eine hohe Biogasausbeute ermöglicht.

In einer weiteren vorteilhaften Ausgestaltung der Erfindung kann der Verwendungszweck der hinterlegten Strategien auf die Verwendung des Erntegutes als erntefrisches Erntegut oder als Silage für die Tierfütterung gerichtet sein, insbesondere die Rindermast und die Milchgewinnung, wobei das Qualitätskriterium Feuchte zwischen 55 % und 70 % liegt, ein Arbeitsparameter die Zugabe einer Menge Siliermittel umfasst, die die Bildung von Milchsäure fördert, ein Arbeitsparameter die Schnittlänge des Erntegutes ist und die Schnittlänge in einem Bereich von 40 mm bis 70 mm liegt, wobei die Schnittlänge umso kürzer vorgeschlagen wird je nasser das Erntegut ist, ein Arbeitsparameter die Schnitthöhe eines Mähwerks umfasst und die Schnitthöhe in einem Bereich von 50 mm bis 80 mm vorgeschlagen wird, wird sichergestellt, dass das Erntegut einen hohen Energiegehalt aufweist, für Rinder leicht verdaulich ist und einen hohen Anteil an Milchsäure umfasst, sodass die Rinder entweder in der Mast einen effizienten Massezuwachs erfahren oder in der Milchgewinnung eine hohe Milchleistung erbringen. In diesem Zusammenhang ist es von Vorteil, wenn der Trockenmassegehalt des Erntegutes ermittelt wird, vorzugsweise durch Analyse des Erntegutes und die Zugabe der Menge an Siliermittel in Abhängigkeit vom Trockenmassegehalt erfolgt, wobei vorzugsweise für einen optimalen Trockenmassegehalt eine optimale Anwelkzeit ermittelt wird.

In einer weiteren vorteilhaften Ausgestaltung der Erfindung kann der Verwendungszweck der hinterlegten Strategien auf die Verwendung des Erntegutes als Heu gerichtet sein, wobei der Qualitätsparameter Feuchte maximal 15 % beträgt, sodass sichergestellt wird, dass das Erntegut hinreichend gut verdichtet werden kann und je nachdem ob die Verdichtung in Form eines Erntegutballens oder in einem Silo erfolgt, ein Schimmeln oder Faulen des Erntegutes vermieden wird.

Die erfindungsgemäße Aufgabe wird ferner durch ein Verfahren zum Betreiben eines landwirtschaftlichen Systems zur Ausführung einer Futtermittelernteprozesskette gelöst.

Gemäß dem Anspruch 15 wird ein Verfahren zum Betreiben eines landwirtschaftlichen Systems zur Ausführung einer Futtermittelernteprozesskette vorgeschlagen,
- wobei durch zumindest eine landwirtschaftliche Arbeitsmaschine spezifische Teilbearbeitungsprozesse eines Gesamtbearbeitungsprozesses der Futtermittelernteprozesskette durchgeführt werden,
- wobei die jeweilige Arbeitsmaschine durch ein dieser zugeordnetes, einen Speicher zum Hinterlegen von Daten und eine Rechenvorrichtung zur Verarbeitung der im Speicher hinterlegten Daten aufweisendes Assistenzsystems angesteuert wird, wobei durch das jeweilige Assistenzsystem mit der jeweiligen zur Durchführung der Teilbearbeitungsprozesse vorgesehenen Arbeitsmaschine und/oder deren Arbeitsorganen jeweils ein eigenständig arbeitender Regelautomat gebildet wird, durch welchen die Ansteuerung der Arbeitsmaschinen zur Durchführung des Teilbearbeitungsprozesses optimiert wird, wobei das System einen Prozesssupervisor als übergeordneter Regelungseinheit der Regelautomaten aufweist, durch den die einzelnen Regelautomaten angesteuert werden und dass zum Datenaustausch der Regelautomaten untereinander die Assistenzsysteme durch ein Kommunikationsmittel mit dem Prozesssupervisor verbunden werden. Auf die erfindungsgemäßen Vorteile des landwirtschaftlichen Systems darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Übersichtsdarstellung eines landwirtschaftlichen Systems zur Ausführung einer Futtermittelernteprozesskette;
- Fig. 2: schematisch und exemplarisch eine Darstellung von Details eines einer landwirtschaftlichen Arbeitsmaschine zugeordneten Assistenzsystems;
- Fig. 3: exemplarisch und schematisch eine Übersicht mehrerer Regelautomaten des landwirtschaftlichen Systems gemäß Fig. 1;
- Fig. 4: exemplarisch und schematisch eine Darstellung des Funktionsprinzips eines der Regelautomaten des landwirtschaftlichen Systems gemäß Fig. 3;
- Fig. 5: exemplarisch und schematisch eine Darstellung des Funktionsprinzips eines den Regelautomaten des landwirtschaftlichen Systems übergeordneten Prozesssupervisors; und
- Fig. 6: weitere Details von Assistenzsystemen gemäß Fig. 2.

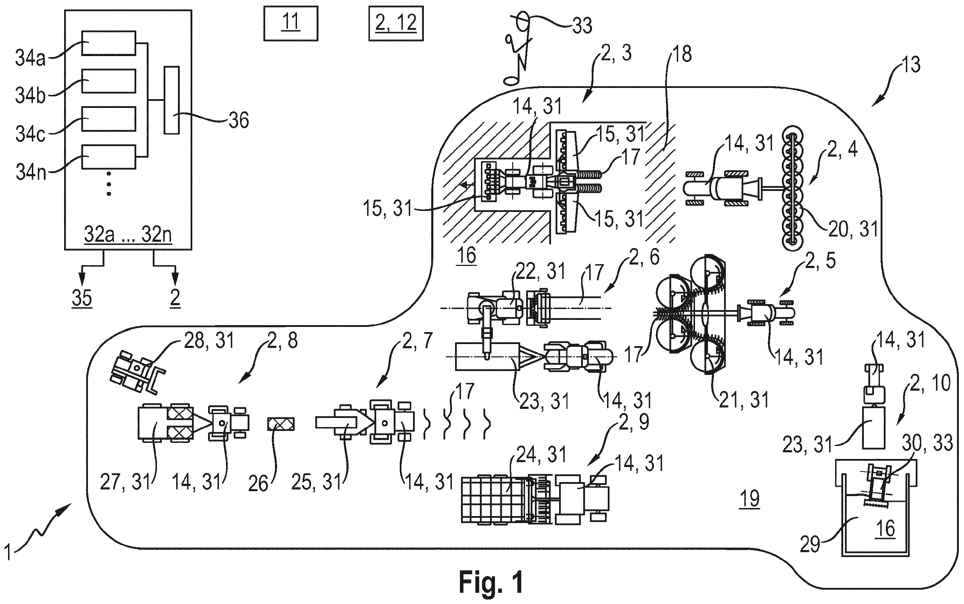

Fig. 1 zeigt schematisch und exemplarisch eine Übersichtsdarstellung eines landwirtschaftlichen Systems 1 zur Ausführung einer Futtermittelernteprozesskette 13. Das landwirtschaftliche System 1 umfasst zumindest eine landwirtschaftliche Arbeitsmaschine 31 zur Durchführung eines spezifischen Teilbearbeitungsprozesses 2 eines Gesamtbearbeitungsprozesses der Futtermittelernteprozesskette 13.

Der schematisch dargestellte Futtermittelernteprozess umfasst eine Vielzahl der noch näher zu beschreibenden Teilbearbeitungsprozesse 2. Im Einzelnen sind die Teilbearbeitungsprozesse 2 Mähen 3, Wenden oder Zetten 4, Schwaden 5, Schwadernte mittels Feldhäcksler 6, Schwadernte mittels Ballenpresse 7, Aufsammeln und Abtransport der Erntegutballen 8, Schwadernte mittels Ladewagen 9 und Einlagerung 10 des Ernteguts 16 dargestellt. Aus Vereinfachungsgründen sind in Fig. 1 auch alternative Teilbearbeitungsprozesse 2 dargestellt, die sich in der Praxis wechselseitig ausschließen, etwa Schwadernte mittels Feldhäcksler 6 oder Schwadernte mittels Ballenpresse 7 oder Schwadernte mittels Ladewagen 9. Das erfindungsgemäße landwirtschaftliche System 1 wird durch die im Folgenden noch zu erläuternde landwirtschaftliche Arbeitsaufgabe 11 beschrieben und umfasst eine anwendungsfallabhängige Auswahl von Teilbearbeitungsprozessen 2 und die Reihenfolge ihrer Abarbeitung. Als weiterer Teilbearbeitungsprozess 2 kommt zudem die Entscheidung über den Erntestart 12 des Futtermittelernteprozesses 13 in Betracht. Die die jeweilige landwirtschaftliche Arbeitsaufgabe 11 beschreibenden Teilbearbeitungsprozesse 2 bilden einen Gesamtbearbeitungsprozess der Futtermittelernteprozesskette 13 ab

Im dargestellten Ausführungsbeispiel nach Fig. 1 wird der Teilbearbeitungsprozess 2 Mähen 3 von einem Traktor 14 als Arbeitsmaschine 31 mit Front- und Seitenmähwerken 15 als Arbeitsorgan realisiert, wobei das Erntegut 16 in einem einzigen Erntegutschwad 17 abgelegt wird. Es liegt im Rahmen der Erfindung, dass das dreiteilige Mähwerk 15 auch nur als ein- oder zweiteiliges Mähwerk 15 ausgeführt ist und mehrere Erntegutschwaden 17 bilden kann. Zudem kann das Erntegut 16 im Teilbearbeitungsprozess 2 Mähen 3 auch in Breitablage 18 auf dem Feldboden 19 abgelegt werden.

Der Teilbearbeitungsprozess 2 Wenden oder Zetten 4 wird mittels einer von einem Traktor 14 gezogenen oder auf diesem aufgesattelten Heuwerbungsmaschine 20 als Arbeitsorgan, auch als Wender oder Zetter bezeichnet, umgesetzt und ist dem Teilbearbeitungsprozess 2, dem Mähen 3, nachgeordnet, wobei in diesem Fall im Teilbearbeitungsprozess 2, dem Mähen 3, das Erntegut 16 in Breitablage 18 abgelegt wird. Der Teilbearbeitungsprozess 2 des Wendens oder Zettens 4 wird in Abhängigkeit von der Feuchte des in Breitablage 18 abgelegten Erntegutes 16 ein oder mehrmals durchgeführt.

Wurde das Erntegut 16 in Breitablage 18 auf dem Feldboden 19 abgelegt umfasst die Futtermittelernteprozesskette 13 den Teilbearbeitungsprozess 2 des Schwadens 5. Im hier dargestellten Ausführungsbeispiel wird der Teilbearbeitungsprozess 2 des Schwadens 5 von einem Gespann aus Traktor 14 und Schwader 21 als Arbeitsorgan realisiert, wobei der Schwader 21 als Vierkreiselschwader ausgeführt ist und das Erntegut 16 in einem einzigen Erntegutschwad 17 ablegt. Denkbar ist hier aber auch der Einsatz von Ein- oder Mehrkreiselschwadern, welche das Erntegut 16 in einem oder mehreren Erntegutschwaden 17 auf dem Feldboden 19 ablegen.

In einer ersten Ausgestaltung wird der Erntegutschwad 17 von einem Feldhäcksler 22 als Arbeitsmaschine 31 aufgenommen, in an sich bekannter Weise zerkleinert und an einen von einem Traktor 14 gezogenen Transportwagen 23 übergeben. Alternativ kann der Erntegutschwad 17 von einem von einem Traktor 14 gezogenen Ladewagen 24 aufgenommen werden. Ladewagen 24 sind in der Regel mit einer als Pickup ausgeführten Aufsammeleinrichtung ausgestattet, können je nach Ausstattung eine Zerkleinerung des aufgenommenen Ernteguts 16 vornehmen und dieses sodann in gewissem Umfang vorverdichtet an den eigentlichen Transportbehälter übergeben. Eine weiter Alternative kann die Aufnahme des Erntegutschwades 17 durch eine von einem Traktor 14 gezogene Ballenpresse 25, hier vorzugsweise als sogenannte Quaderballenpresse ausgeführte Ballenpresse 25, sein, wobei das Erntegut 16 sodann als Erntegutballen 26 auf dem Feldboden 19 abgelegt wird. An diesen Teilbearbeitungsprozess 2 schließt sich in der Regel der Teilbearbeitungsprozess 2 Aufsammeln und Abtransport der Erntegutballen 8 an, wobei hier in der Regel von Traktoren 14 gezogene Pritschenwagen 27 und Hubstapler 28, etwa Traktoren 14 mit Frontlader oder sogenannte Teleskoplader, zum Aufnehmen und überladen der Erntegutballen 26 zum Einsatz kommen.

Der Teilbearbeitungsprozess 2 der Einlagerung des Erntegutes 10, kann einerseits die Einlagerung der Erntegutballen 26 umfassen. Andererseits kann das etwa von einem Transportwagen 23 oder einem Ladewagen 24 aufgenommene Erntegut 16 in einem Silo 29 eingelagert werden, wobei im dargestellten Ausführungsbeispiel ein Flachsilo gezeigt ist. Die Einlagerung 10 des Erntegutes 16 in einem Flachsilo erfolgt in der Regel in der Weise, dass der Traktor 14 gezogene Lade- oder Transportwagen 23, 24 das Erntegut 16 in das Silo 29 abgibt und dort ein Verdichtungsfahrzeug 30 das Erntegut 16 in an sich bekannter Weise durch mehrmaliges Überrollen und Zusammenschieben verdichtet.

Der jeweilige Traktor 14, das Mähwerk 15, die Heuwerbungsmaschine 20, der Schwader 21, der Feldhäcksler 22, der Transportwagen 23, der Ladewagen 24, die Ballenpresse 25, der Pritschenwagen 27, der Hubstapler 28 und das Verdichtungsfahrzeug 30 bilden die landwirtschaftlichen Arbeitsmaschinen 31 des zu optimierenden Futtermittelernteprozesses und die ihn beschreibende Futtermittelernteprozesskette 13. Es liegt im Rahmen der Erfindung, dass jede der landwirtschaftlichen Arbeitsmaschinen 31 selbstfahrend ausgeführt sein kann, wobei es auch im Rahmen der Erfindung liegt, dass die landwirtschaftlichen Arbeitsmaschinen 31 autonom, d.h. ohne Fahrer, den jeweiligen Teilbearbeitungsprozess 2 realisieren können.

Der Futtermittelernteprozess setzt sich folglich aus dem Zusammenspiel des zu erntenden Erntegutes 16 mit den die Futtermittelernteprozesskette 13 bildenden Teilbearbeitungsprozessen 2 und den jeweils diesen zugeordneten, zur Durchführung erforderlichen landwirtschaftlichen Arbeitsmaschinen 31 zusammen. Die landwirtschaftlichen Arbeitsmaschinen 31 umfassen unterschiedliche Arbeitsorgane, wie weiter oben bereits angedeutet. Die Arbeitsweise der landwirtschaftlichen Arbeitsmaschinen 31 und der ihnen jeweils zugeordneten Arbeitsorgane können durch eine Änderung ihnen jeweils zugeordneter und noch zu beschreibender Arbeitsparameter 35 gesteuert werden.

Der jeweilige Teilbearbeitungsprozess 2 des Futtermittelernteprozesses wird mittels eines für die jeweilige Arbeitsmaschine 31 spezifischen Assistenzsystems 32a ... 32n, welches der jeweiligen durchführenden landwirtschaftlichen Arbeitsmaschine 31 zugeordnet ist, optimiert. Die Assistenzsysteme 32a ... 32n sind dazu ausgeführt und eingerichtet, einen Nutzer 33 bei der Optimierung der den Futtermittelernteprozess beschreibenden landwirtschaftlichen Arbeitsaufgabe 11 des jeweiligen Teilbearbeitungsprozesses 2 zu unterstützen. Die Optimierung des Futtermittelernteprozesses umfasst zumindest die Planung und/oder Durchführung der die Umsetzung der landwirtschaftlichen Arbeitsaufgabe 11 bewirkenden Futtermittelernteprozesskette 13, wobei die Futterernteprozesskette 13, wie weiter oben bereits beschrieben, eine Vielzahl von Teilbearbeitungsprozessen 2 und eine Vielzahl landwirtschaftlicher Arbeitsmaschinen 31 umfasst, welche in einer vorgegebenen Reihenfolge die landwirtschaftliche Arbeitsaufgabe 11 abarbeiten.

Das jeweilige Assistenzsystem 32a ... 32n der landwirtschaftlichen Arbeitsmaschinen 31 ist weiter eingerichtet, nach vorgegebenen Prozessstrategien 34a ... 34n die Durchführung der landwirtschaftlichen Arbeitsaufgabe 11 zu optimieren, wobei die vorgegebenen Prozessstrategien 34a ... 34n in dem jeweiligen Assistenzsystem 32a ... 32n hinterlegt sind und/oder an dieses übergeben werden. Das jeweilige Assistenzsystem 32a ... 32n generiert mittels der vorgegebenen Prozessstrategien 34a ... 34n optimierte Arbeitsparameter 35 zur optimierten Durchführung des jeweiligen Teilbearbeitungsprozesses 2 für die Futterernteprozesskette 13 und die sie ausführende zumindest eine landwirtschaftliche Arbeitsmaschine 31. Dabei sind die jeweils vorgegebenen Prozessstrategien 34a ... 34n so strukturiert, dass sie die optimierten Arbeitsparameter 35 und die optimierten Teilbearbeitungsprozesse 2 in Abhängigkeit von den Futtermittelernteprozess beschreibenden Qualitätsparametern 36 ermitteln, wobei die Qualitätsparameter 36 strategieabhängig vorgegeben oder vorgebbar sind. Vorgegeben können besagte Qualitätsparameter 36 dadurch sein, dass jeder Prozessstrategie 34a ... 34n ganz bestimmte Qualitätsparameter 36 zugeordnet sind. Vorgebbar können besagte Qualitätsparameter 36 auch dadurch sein, dass beispielsweise der Nutzer 33 für eine bestimmte Prozessstrategie 34a ... 34n ganz bestimmte Qualitätsparameter 36 selbsttätig festlegen kann.

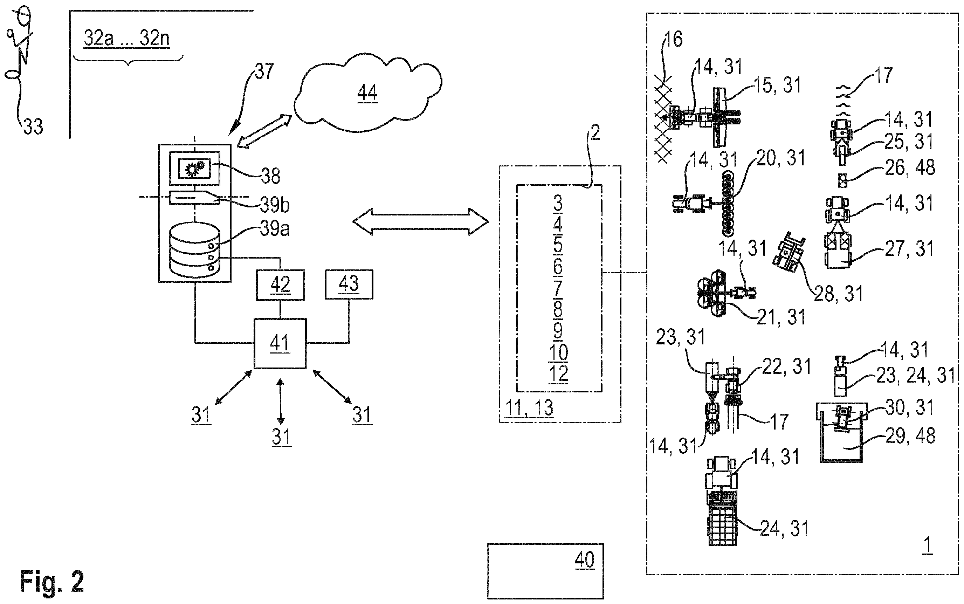

In Fig. 2 ist schematisch und exemplarisch eine Darstellung von Details eines einer landwirtschaftlichen Arbeitsmaschine 21 zugeordneten Assistenzsystems 32a dargestellt. Anhand von Fig. 2 werden nachstehend Details eines der Assistenzsysteme 32a ... 32n einer jeweiligen Arbeitsmaschine 31 näher. Das Assistenzsystem 32a umfasst zumindest eine Bedieneinrichtung 37, wobei die Bedieneinrichtung 37 von zumindest einer Eingabe- und Anzeigeeinheit 38 und einer Speichereinheit 39a und einer Datenverarbeitungseinheit 39b gebildet wird. Die Bedieneinrichtung 37 kann einer oder mehreren der den Futtermittelernteprozess beschreibenden landwirtschaftlichen Arbeitsmaschinen 31 und/oder einer stationären Einheit 40 zugeordnet sein, wobei eine oder mehrere der Bedieneinrichtungen 37 eingerichtet sind untereinander Daten 41 auszutauschen. Die jeweilige Bedieneinrichtung 37 ist zudem so eingerichtet, dass sie Daten 41 aus einer der Speichereinheit 39a zugeordneten internen Datenquelle 42 und/oder einer oder mehreren externen Datenquellen 43 bezieht. In einer vorteilhaften Ausgestaltung kann die der jeweiligen Bedieneinrichtung 37 zugeordnete Speicher- und Datenverarbeitungseinheit 39a, 39b in Teilen oder vollständig einer Datencloud 44 zugeordnet sein. Wie bereits beschrieben umfasst der Futtermittelernteprozess einen oder mehrere Teilbearbeitungsprozesse 2, wobei die Teilbearbeitungsprozesse 2 einen oder mehrere der Teilbearbeitungsprozesse 2 Entscheidung Erntestart 12, Mähen 3 des Erntegutes 16, Wenden 4 des Erntegutes 16, Schwaden 5 des Erntegutes 16, Schwadernte mittels Feldhäcksler 6, Schwadernte mittels Ballenpresse 7, Schwadernte mittels Ladewagen 9, Aufsammeln und Abtransport von Erntegutballen 8 sowie die Einlagerung 10 von Erntegut 16 umfassen.

Der zu optimierende Teilbearbeitungsprozess 2 wird schließlich wie bereits erläutert als landwirtschaftliche Arbeitsaufgabe 11 beschrieben, wobei die Beschreibung der landwirtschaftliche Arbeitsaufgabe 11 die erforderlichen Teilbearbeitungsprozesse 2 und die Reihenfolge ihrer Abarbeitung umfasst. Die Reihenfolge der Abarbeitung der Teilbearbeitungsprozesse 2 bildet zugleich die jeweilige Futtermittelernteprozesskette 13 ab.

Je nach Art des zu optimierenden Teilbearbeitungsprozesses 2 umfasst der die jeweilige landwirtschaftliche Arbeitsaufgabe 11 definierende Teilbearbeitungsprozess 2 eine oder mehrere landwirtschaftliche Arbeitsmaschinen 31, etwa Mähwerke 15, Heuwerbungsmaschinen 20, vorzugsweise Heuwender, Schwader 21, Erntemaschinen, vorzugsweise Feldhäcksler 22, Ballenpresse 25 und/oder Ladewagen 24, Transportfahrzeuge, vorzugsweise Traktoren 14, Transportwagen 23, Pritschenwagen 27, Hubstapler 28 und Verdichtungsfahrzeuge 30. Zudem umfasst die Futtermittelernteprozesskette 13 eine Einlagerung 10 des Erntegutes 16, wobei eine Einlagerung 10 in Form von Erntegutballen 26 oder eine Einlagerung 10 in Silos 29 erfolgen kann. Nachfolgend werden Erntegutballen 26 und Silos 29 gemeinschaftlich als Einlagerungsmedien bezeichnet. Jeder der vorstehend genannten Arbeitsmaschinen 31 ist eines der Assistenzsystems 32a ... 32n zugeordnet, welche spezifisch auf die jeweilige Arbeitsmaschine 31 abgestimmt sind. Hierzu sind die Prozessstrategie 34a ... 34n sowie die Qualitätsparameter 36 an dem von der jeweiligen Arbeitsmaschine 31 durchzuführenden Teilbearbeitungsprozess 2 orientiert.

Das jeweilige Assistenzsystem 32a ... 32n mit der jeweiligen zur Durchführung der Teilbearbeitungsprozesse vorgesehenen Arbeitsmaschine 31 und/oder deren Arbeitsorgane bildet jeweils einen eigenständig arbeitenden Regelautomaten 45a ... 45n, welcher der Optimierung der Ansteuerung der jeweiligen Arbeitsmaschine 31 zur Durchführung des spezifischen Teilbearbeitungsprozesses 2 dient. Regelautomaten 45a ... 45 n können unter anderem als Mähmaschinenautomaten 45a, Wendemaschinenautomaten 45b, Schwadmaschinenautomaten 45c, Erntemaschinenautomaten 45d, Transportfahrzeugautomaten 45e und Ballenpressenautomaten 45f ausgeführt und eingerichtet sein.

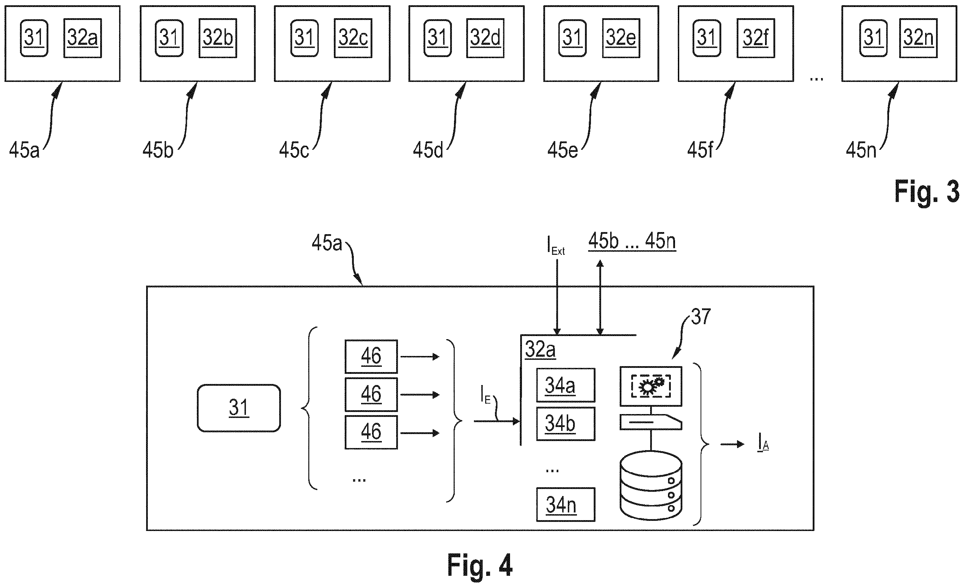

In Fig. 3 ist exemplarisch und schematisch eine vereinfachte Übersicht mehrerer Regelautomaten 45a ... 45n des landwirtschaftlichen Systems 1 gemäß Fig. 1 dargestellt. Jeder Regelautomat 45a ... 45n des landwirtschaftlichen Systems 1 umfasst eine Arbeitsmaschine 31 sowie ein korrespondierendes Assistenzsystem 32a ... 32n.

In Fig. 4 ist exemplarisch und schematisch eine Darstellung des Funktionsprinzips eines der Regelautomaten 45a ... 45n des landwirtschaftlichen Systems 1 gemäß Fig. 1 gezeigt. Die Arbeitsmaschine 31 sowie deren Arbeitsorgane weisen Sensorsysteme 46 auf, welche der Detektion von Einstellparametern der Arbeitsmaschine 31 und ihrer Arbeitsorgane dienen. Diese werden dem Assistenzsystem 32a des Regelautomaten 45a als Eingangsdaten I_{E} zugeführt.

Des Weiteren können dem Regelautomaten 45a als Daten 41 externe Daten I_{Ext} zur Verfügung gestellt bzw. übermittelt werden. Insbesondere umfassen die externen Daten I_{Ext} Informationen über äußere, von den Sensorsystemen 46 der Arbeitsmaschine 31 nicht direkt messbare Einflüsse. Externe Daten I_{Ext} sind unter anderem aktuelle Wetterdaten sowie Logistikdaten, welche einen Einfluss auf die Durchführung des durch die jeweilige Arbeitsmaschine 31 durchzuführenden Teilbearbeitungsprozesses 2 haben können. Dazu kann aber auch eine Eingabe durch den Nutzer 33 der Arbeitsmaschine 31 wie auch eine strategische Vorgabe einer den Betrieb der Arbeitsmaschine 31 koordinierenden Person, wie einen Betriebsleiter einer Hofstelle oder eines Lohnunternehmers, zählen. Logistikdaten umfassen beispielsweise Terminvorgaben für das Abernten eines Schlages oder die Koordination der einen Arbeitsmaschine 31 innerhalb der mehrere Arbeitsmaschine 31 umfassenden Erntelogistikkette.

Der Regelautomat 45a generiert autonom jeweils arbeitsmaschinen- und/oder arbeitsorganspezifische Ausgangsdaten I_{A}, welche zu einer Änderung von Einstellparametern der Arbeitsmaschine und/oder der zugehörigen Arbeitsorgane verwendet werden. Der Regelautomat 45a kann von den anderen Regelautomaten 45b ... 45n generierte Daten empfangen und von ihm generierte Daten an die anderen Regelautomaten 45b ... 45n übertragen.

Die vorangehenden Ausführungen zum Regelautomaten 45a gelten entsprechend für die anderen Regelautomaten 45b ... 45n.

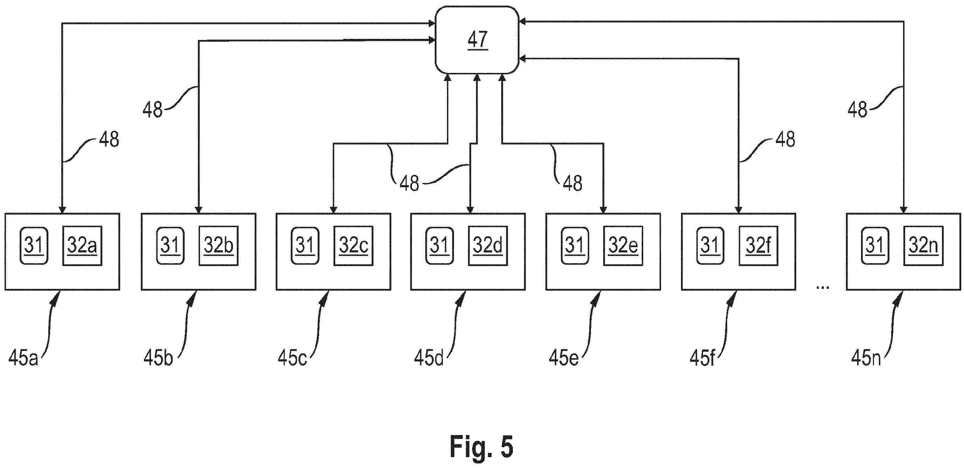

In Fig. 5 ist exemplarisch und schematisch eine Darstellung des Funktionsprinzips eines den Regelautomaten 45a ... 45n des landwirtschaftlichen Systems 1 übergeordneten Prozesssupervisors 47 gezeigt. Das System 1 umfasst den Prozesssupervisor 47 als übergeordnete Regelungseinheit der Regelautomaten 45a ... 45n. Der Prozesssupervisor 47 steuert die einzelnen Regelautomaten 45a ... 45n an. Die Assistenzsysteme 32a ... 32n der Regelautomaten 45a ... 45n sind zum Datenaustausch untereinander durch ein Kommunikationsmittel 48 mit dem Prozesssupervisor 47 verbunden.

Der Prozesssupervisor 47 ist dazu eingerichtet, den durch das landwirtschaftliche System 1 auszuführenden Gesamtbearbeitungsprozess gemäß einer hinterlegten oder hinterlegbaren Prozessstrategie durch eine aufeinander abgestimmte Ansteuerung einzelner oder aller Regelautomaten 45a ... 45n autonom zu optimieren. Der Prozesssupervisor 47 steuert in Abhängigkeit vom Informationsgehalt des Datenaustauschs die einzelnen Regelautomaten 45a ... 45n an.

Die Assistenzsysteme 32a ... 32n und die zugehörige Arbeitsmaschinen 31, welche die Regelautomaten 45a ... 45n bilden und die zur Durchführung der spezifische Teilbearbeitungsprozesse 2 des Gesamtbearbeitungsprozesses zur Ausführung der Futtermittelernteprozesskette 13 beitragen, werden hierzu durch den als übergeordnete Regelungseinheit der Regelautomaten 45a ... 45n ausgeführten Prozesssupervisor 47 angesteuert. Indem die Assistenzsysteme 32a ... 32n zum Datenaustausch der Regelautomaten 45a ... 45n untereinander durch das Kommunikationsmittel 48 mit dem Prozesssupervisor 47 verbunden sind, wird es dem Prozesssupervisor 47 ermöglicht, im Verlauf der Ausführung der Futtermittelernteprozesskette 13 von den Regelautomaten 45a ... 45n der zumindest einen den jeweiligen Teilbearbeitungsprozess 2 ausführenden Arbeitsmaschine 31 Daten bzw. Informationen zu empfangen und auszuwerten, welche für die Ausführung eines nachfolgenden, insbesondere darauf aufbauenden Teilbearbeitungsprozesses 2 relevant sind. Dem Prozesssupervisor 47 kommt die Aufgabe zu, den durch das landwirtschaftliche System 1 durchzuführenden Gesamtbearbeitungsprozess zu optimieren, indem der Prozesssupervisor 47 gezielt auf die Regelautomaten 45a ... 45n der jeweiligen an einem, insbesondere nachfolgenden, Teilbearbeitungsprozess 2 teilnehmenden Arbeitsmaschine 31 Einfluss nimmt. Der Prozesssupervisor 47 koordiniert die einzelnen, insbesondere aufeinander aufbauenden, Teilbearbeitungsprozesse 2 unter Berücksichtigung der zwischenzeitlichen Arbeitsergebnisse nach erfolgter Durchführung eines Teilbearbeitungsprozesses.

Zur Steuerung einer Aktivierung und Ansteuerung einzelner Regelautomaten 45a ... 45n und/oder eines Datenaustauschs zumindest einzelner Regelautomaten 45a ... 45n untereinander durch den Prozesssupervisor 47 ist zumindest eine Regelung, die als Regelwerk oder Regelstruktur ausgeführt ist, hinterlegt, welche bestehende Abhängigkeiten zwischen Einstellparametern und Qualitätsparametern 36 der verschiedenen Teilbearbeitungsprozesse 2 untereinander umfasst.

Weiterhin kann der Prozesssupervisor 47 zur autonomen Vorgabe von Einstellgrenzen eingerichtet sein, innerhalb derer der jeweilige Regelautomat 45a ... 45n die jeweilige Arbeitsmaschine 31 ansteuert. Alternativ oder zusätzlich kann der Prozesssupervisor 47 zur autonomen Vorgabe von Zielwerten der Qualitätsparameter 36 eingerichtet sein, innerhalb derer der jeweilige Regelautomat 45a ... 45n die jeweilige Arbeitsmaschine 31 ansteuert.

Zur Abbildung funktionaler Zusammenhänge eines von einer der Arbeitsmaschinen 31 durchzuführenden Teilbearbeitungsprozesses 2 ist zumindest einem der Qualitätsparameter 36 zumindest ein adaptives Kennlinienfeld zugeordnet, wobei der mindestens eine Qualitätsparameter 36 als Ausgangsgröße des zumindest einen Kennfeldes definiert ist. Anhand dieses funktionalen Zusammenhangs eines Systemmodells für eine jeweilige Arbeitsmaschine 31 und deren Arbeitsorgane kann in Abhängigkeit von unterschiedlichen Betriebssituationen jeweils auf Einstellparameter geschlossen werden, die eine optimierte Durchführung des Teilbearbeitungsprozesses 2 ermöglichen.

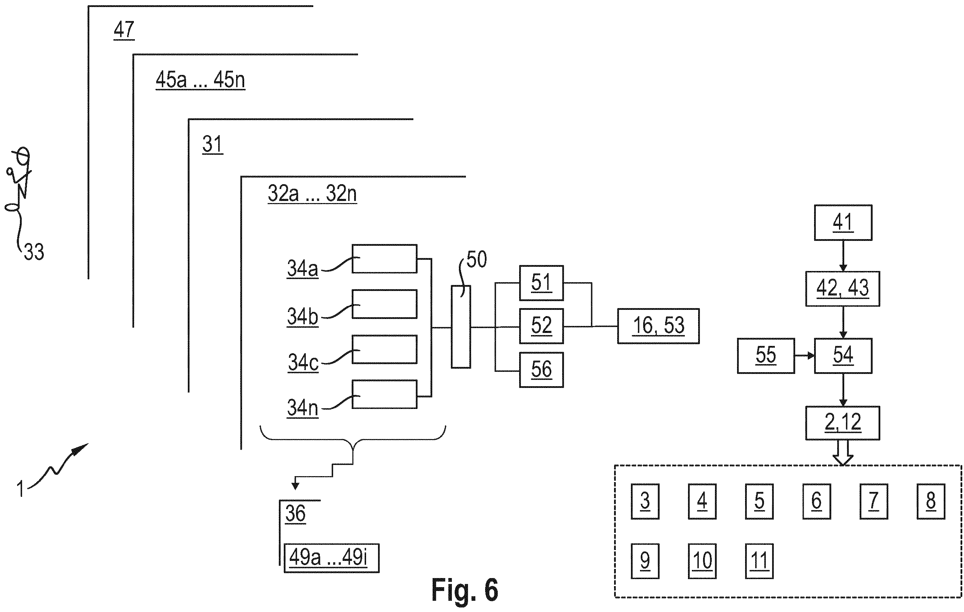

Fig. 6 zeigt weitere Details des Zusammenwirkens des Prozesssupervisors 47 mit den Regelautomaten 45a ... 45n der verschiedenen Arbeitsmaschinen 31 sowie mit deren zugehörigen Assistenzsystemen 32a ... 32n nach Figur 2. In Fig. 6 ist insbesondere der hierarchische Aufbau des landwirtschaftlichen Systems 1 dargestellt.

Gemäß Fig. 6 werden die in dem jeweiligen Assistenzsystem 32a ... 32n hinterlegten Prozessstrategien 34a ... 34n von dem Nutzer 33 vorgegeben oder von dem jeweiligen Assistenzsystem 32a ... 32n vorgeschlagen, wobei die hinterlegten Prozessstrategien 34a ... 34n auf einen jeweiligen Verwendungszweck 50 des Erntegutes 16 gerichtet sind. Vorzugsweise umfassen die hinterlegten Prozessstrategien 34a ... 34n typische Verwendungszwecke 50, wie die Verwendung des Erntegutes 16 zur
- Biogasgewinnung 51 aus erntefrischem oder siliertem Erntegut 16
- Tierfütterung 52 aus erntefrischem oder siliertem Erntegut 16, wobei die Tierfütterung 52 insbesondere die Rindermast und die Milchgewinnung umfasst
- Einlagerung 56 des Ernteguts 16 als Heu.

Weiter umfasst jede der vorgebbaren Prozessstrategien 34a ... 34n ein oder mehrere der Qualitätsparameter 36, wobei jeder der Qualitätsparameter 36 das Arbeitsergebnis der jeweiligen Futterernteprozesskette 13 definiert und ein oder mehrere der Qualitätskriterien 49a ... 49i, umfasst.

Nachstehend sind Qualitätskriterien 49a ... 49i aufgelistet:
- Kraftstoffbedarf 49a, vorzugsweise ein minimaler Kraftstoffbedarf,
- Durchsatz 49b, vorzugsweise ein maximaler Durchsatz,
- Gesamtkosten 49c, vorzugsweise minimale Gesamtkosten,
- Erntegutqualität 49d, vorzugsweise eine maximale Erntegutqualität,
- Erntegutverlust 49e, vorzugsweise ein minimaler Erntegutverlust,
- Energiegehalt 49f des Erntegutes 16, vorzugsweise ein maximaler Energiegehalt,
- Verschmutzungsgrad 49g, vorzugsweise ein minimaler Verschmutzungsgrad,
- die Feuchte 49h des Erntegutes 16, vorzugsweise eine an den Verwendungszweck 45 angepasste optimierte Feuchte,
- Erntegutertrag (49i), vorzugsweise ein maximaler Erntegutertrag.

Gemäß Fig. 6 kann ein typischer Futterernteprozess so strukturiert sein, dass von dem Prozesssupervisor 47 und/oder zumindest einem der Assistenzsysteme 32a ... 32n zunächst ein optimaler Zeitpunkt für den Erntestart 12 bestimmt wird, wobei der Erntestart 12 den ersten, die jeweilige Futtermittelernteprozesskette 13 definierende Teilbearbeitungsprozesse 2 bildet. Der Erntestart 12 kann von einer Vielzahl von an sich bekannten Entscheidungskriterien 54 abhängen, wobei typische Entscheidungskriterien 54 Wetterdaten, eine geeignete Uhrzeit für den Erntebeginn, das Wachstumsstadium des Erntegutes 16, die Zusammensetzung des Erntegutes 16, die Höhenlage in der das Erntegut 16 geerntet werden soll, gegebenenfalls die Bodenfeuchte und ganz wesentlich die Feuchte des Erntegutes 16 selbst sein können. Die Entscheidungskriterien 54 werden aus den Daten 41 ermittelt, die das jeweilige Assistenzsystem 32a ... 32n aus internen oder externen Datenquellen 42, 43 sowie dem Prozesssupervisor 47 bezieht. Es liegt im Rahmen der Erfindung, dass die Daten 41 zudem von den an sich bekannten und hier nicht näher beschriebenen Sensorsystemen 46 ermittelt werden können. Das jeweilige Assistenzsystem 32a ... 32n einer jeweiligen Erntemaschine 31, welche zur Durchführung des jeweiligen Teilbearbeitungsprozesses 2 vorgesehen ist, analysiert die bezogenen Daten 41 gemäß den einsatzfallabhängig definierten Entscheidungskriterien 54 und schlägt als Ergebnis den Zeitpunkt des Erntestarts 12 vor. Im einfachsten Fall sind in den Assistenzsystemen 32a ... 32n Grenzwerte 55 für die Entscheidungskriterien 54 hinterlegt.

Der eigentliche Gesamtbearbeitungsprozess des Erntens, welcher weiter oben anhand der Darstellungen in den Fig. 1 und 2 veranschaulicht ist, beginnt mit dem Teilbearbeitungsprozess 2 Mähen 3. Je nach Anzahl und Ausstattungsgrad der zum Einsatz kommenden Mähwerke 15 können die Arbeitsparameter 35 ein oder mehrere der Arbeitsparameter 35 Schnitthöhe, die Entscheidung, ob ein Aufbereiter zum Einsatz kommen soll oder nicht, die Drehzahl der rotierend angetriebenen Mähmesser und die Drehzahl des Aufbereiters, der Klingenzustand der Mähmesser, der Auflagedruck der Mähwerke 15 auf den Feldboden 19 umfassen. Jeder dieser Arbeitsparameter 35 beeinflusst die zuvor beschriebenen Qualitätsparameter 36 des Erntegutes 16. So kann beispielsweise eine zu niedrige Schnitthöhe dazu führen, dass das Qualitätskriterium Verschmutzungsgrad 49g über einem zulässigen Grenzwert 55 liegt. Die Arbeitsparameter 35 werden aus Daten 41 ermittelt, die das jeweilige Assistenzsystem 32a ... 32n der betreffenden Erntemaschine 31 aus internen oder externen Datenquellen 42, 43 bezieht. Es liegt im Rahmen der Erfindung, dass die Daten 41 zudem von einem dem jeweiligen Mähwerk 15 zugeordneten Sensorsystem 46 ermittelt werden. Das betreffende Assistenzsystem 32a ... 32n analysiert die bezogenen Daten 41 gemäß den einsatzfallabhängig definierten Qualitätsparametern 36 und schlägt als Ergebnis optimierte Arbeitsparameter 35 für den Teilbearbeitungsprozess 2 Mähen 3 vor. Im einfachsten Fall sind in dem betreffenden Assistenzsystem 32a ... 32n Grenzwerte 55 für die Qualitätsparameter 36 hinterlegt.

Wie zuvor bereits beschrieben, können die Mähwerke 15 das Erntegut 16 in einem oder mehreren Erntegutschwaden 17 oder in Breitablage 18 auf dem Feldboden 19 ablegen. Bei Breitablage 18 kann sich als nächster Teilbearbeitungsprozess 2 das Wenden 4 anschließen. Dabei wird das Erntegut 16 aufgewirbelt und wieder in Breitablage 18 abgelegt, sodass das Erntegut 16 mehr oder weniger gleichmäßig Wind und Sonne ausgesetzt wird, um die Trocknung des Erntegutes 16 zu beschleunigen.

Die Arbeitsparameter 35 der zum Einsatz kommenden Heuwerbungsmaschinen 20 können ein oder mehrere der Arbeitsparameter 35 Trockenzeit, Rechhöhe, Streuwinkel, Fahrroute und Fahrgeschwindigkeit sein. Zudem können Umwelteinflüsse, wie etwa die Bodenfeuchte, die Windgeschwindigkeit und die Luftfeuchte berücksichtigt werden. So kann beispielsweise eine zu niedrige Rechhöhe dazu führen, dass das Qualitätskriterium Verschmutzungsgrad 49g über einem zulässigen Grenzwert 55 liegt. Die Arbeitsparameter 35 werden aus Daten 41 ermittelt, die das betreffende Assistenzsystem 32a ... 32n aus den internen oder externen Datenquellen 42, 43 bezieht. Es liegt im Rahmen der Erfindung, dass die Daten 41 zudem von Sensorsystemen 46, welche der jeweiligen Heuwerbungsmaschine 20 zugeordnet sein können, ermittelt werden. Das betreffende Assistenzsystem 32a ... 32n analysiert die bezogenen Daten 41 gemäß den einsatzfallabhängig definierten Qualitätsparametern 36 und schlägt als Ergebnis optimierte Arbeitsparameter 35 für den Teilbearbeitungsprozess 2 Wenden 4 vor. Im einfachsten Fall sind in dem betreffenden Assistenzsystem 32a ... 32n Grenzwerte 55 für die Qualitätsparameter 36 hinterlegt. Aufgrund dessen, dass das Wenden 4 dem alleinigen Zweck einer Trocknungsbeschleunigung des Erntegutes 16 dient, kann ein Arbeitsparameter 35 hier auch die Anzahl der Wiederholungen des Teilbearbeitungsprozesses 2 Wenden 4 oder das völlige Weglassen dieses Teilbearbeitungsprozesses 2 umfassen.

Wird das Erntegut 16 in Breitablage 18 auf dem Feldboden 19 abgelegt muss sich als weiterer Teilbearbeitungsprozess 2 das Schwaden 5 anschließen. Wie bereits beschrieben hängt es von der Art des Schaders 21 ab, ob ein oder mehrere Erntegutschwaden 17 auf dem Feldboden 19 abgelegt werden. Die ein oder mehreren Arbeitsparameter 35 des jeweils eingesetzten Schwaders 21 können die Trockenzeit, die Rechhöhe, die Neigung des jeweiligen Schwadkreisels, die Fahrroute und die Fahrgeschwindigkeit sein. Zudem können Umwelteinflüsse, wie etwa die Bodenfeuchte, die Windgeschwindigkeit und die Luftfeuchte berücksichtigt werden. So kann beispielsweise auch beim Schwaden 5 eine zu niedrige Rechhöhe dazu führen, dass das Qualitätskriterium Verschmutzungsgrad 49g über einem zulässigen Grenzwert 55 liegt. Die Arbeitsparameter 35 werden aus Daten 41 ermittelt, die das betreffende Assistenzsystem 32a ... 32n aus internen Datenquellen 42 oder externen Datenquellen 43 bezieht. Es liegt im Rahmen der Erfindung, dass die Daten 41 zudem von Sensorsystemen 46, welche dem jeweiligen Schwader 21 zugeordnet sein können, ermittelt werden. Das betreffende Assistenzsystem 32a ... 32n analysiert die bezogenen Daten 41 gemäß den einsatzfallabhängig definierten Qualitätsparametern 36 und schlägt als Ergebnis optimierte Arbeitsparameter 35 für den Teilbearbeitungsprozess 2 Schwaden 5 vor. Im einfachsten Fall sind in dem betreffenden Assistenzsystem 32a ... 32n Grenzwerte 55 für die Qualitätsparameter 36 hinterlegt.

Unabhängig davon, auf welche Weise das Erntegut 16 zu einem Erntegutschwad 17 geformt wurde erfolgt schließlich dessen Ernte, wobei hier die Teilbearbeitungsprozesse 2 Schwadernte mittels Feldhäcksler 6, Schwadernte mittels Ballenpresse 7 und Schwadernte mittels Ladewagen 9 unterschieden werden. Allen drei Teilbearbeitungsprozessen 2 ist gemeinsam, dass die Arbeitsparameter 35 aus Daten 41 ermittelt werden, die das jeweilige Assistenzsystem 32a ... 32n aus internen oder externen Datenquellen 42, 43 bezieht. Es liegt auch hier im Rahmen der Erfindung, dass die Daten 41 zudem von an sich bekannten und hier nicht näher beschriebenen Sensorsystemen 46, welche dem jeweiligen Feldhäcksler 22 und zugehörigem Traktor - Transportwagen - Gespann 14, 23, der jeweiligen Ballenpresse 25 oder dem jeweiligen Ladewagen 24 zugeordnet sein können, ermittelt werden. Das jeweilige Assistenzsystem 32a ... 32n analysiert die bezogenen Daten 41 gemäß den einsatzfallabhängig definierten Qualitätsparametern 36 und schlägt als Ergebnis optimierte Arbeitsparameter 35 für die Teilbearbeitungsprozesse 2 Schwadernte mittels Feldhäcksler 6, Schwadernte mittels Ballenpresse 7 und Schwadernte mittels Ladewagen 9 vor. Im einfachsten Fall sind in den betreffenden Assistenzsystemen 32a ... 32n Grenzwerte 55 für die Qualitätsparameter 36 hinterlegt. Die ein oder mehreren Arbeitsparameter 35 können bei Schwadernte mittels Feldhäcksler 6 beispielsweise die Fahrtroute, die Häcksellänge, der Zerkleinerungsgrad des Erntegutes 16 und die Menge an einzubringendem Siliermittel sein. Bei Schwadernte mittels Ballenpresse 7 können die ein oder mehreren Arbeitsparameter 35 beispielsweise die Ballengröße, die Ballendichte, die Menge an einzubringendem Siliermittel und der Ablageort der Erntegutballen 26 sein. Bei Schwadernte mittels Ladewagen 9 können die ein oder mehreren Arbeitsparameter 35 in Analogie zum Feldhäcksler 22 die Fahrtroute, die Häcksellänge, der Zerkleinerungsgrad des Erntegutes 16 und die Menge an einzubringendem Siliermittel sein.

An den Teilbearbeitungsprozess 2 Schwadernte mittels Ballenpresse 7 schließt sich der Teilbearbeitungsprozess 2 Aufsammeln und Abtransport der Erntegutballen 8 an. Hier beschränken sich die Arbeitsparameter 35 im Wesentlichen auf ein optimiertes Überfahren des Feldbodens 19, um mit möglichst wenig Überrollungen die Erntegutballen 26 aufzusammeln. Aber auch in diesem Teilbearbeitungsprozess 2 ist es so, dass die Arbeitsparameter 35 aus Daten 41 ermittelt werden, die das betreffende Assistenzsystem 32a ... 32n aus internen oder externen Datenquellen 42, 43 bezieht. Es liegt auch hier im Rahmen der Erfindung, dass die Daten 41 zudem von an sich bekannten und hier nicht näher beschriebenen Sensorsystemen 46, welche den dem jeweiligen Hubstabler 28 und zugehörigem Traktor - Pritschenwagen - Gespann 14, 27 zugeordnet sein können, ermittelt werden. Das betreffende Assistenzsystem 32a ... 32n analysiert die bezogenen Daten 41 gemäß den einsatzfallabhängig definierten Qualitätsparametern 36 und schlägt als Ergebnis optimierte Arbeitsparameter 35 für den Teilbearbeitungsprozess 2 Aufsammeln und Abtransport der Erntegutballen 8 vor. Im einfachsten Fall sind in dem Assistenzsystem 32 Grenzwerte 55 für die Qualitätsparameter 36 hinterlegt.

Ein weiterer Teilbearbeitungsprozess 2 der erfindungsgemäßen Futtermittelernteprozesskette 13 kann die Einlagerung 56 des Erntegutes 16 in einem Silo 29 sein. Hier beschränken sich die Arbeitsparameter 35 im Wesentlichen auf ein optimiertes Verdichten des Erntegutes 16 in dem Silo 29. Aber auch in diesem Teilbearbeitungsprozess 2 ist es so, dass die Arbeitsparameter 35 aus Daten 41 ermittelt werden, die das betreffende Assistenzsystem 32a ... 32n aus internen oder externen Datenquellen 42, 43 bezieht. Es liegt auch hier im Rahmen der Erfindung, dass die Daten 41 zudem von den an sich bekannten und hier nicht näher beschriebenen Sensorsystemen 46 der Erntemaschinen 31, welche den dem jeweiligen Verdichtungsfahrzeug 30 und zugehörigem Traktor - Transportwagen - Gespann 14, 23 zugeordnet sein können, ermittelt werden. Das betreffende Assistenzsystem 32a ... 32n analysiert die bezogenen Daten 41 gemäß den einsatzfallabhängig definierten Qualitätsparametern 36 und schlägt als Ergebnis optimierte Arbeitsparameter 35 für den Teilbearbeitungsprozess 2 Einlagerung 56 des Erntegutes 16 vor. Im einfachsten Fall sind in dem Assistenzsystem 32 Grenzwerte 55 für die Qualitätsparameter 36 hinterlegt.

Das jeweilige Assistenzsystem 32a ... 32n und/oder der Prozesssupervisor 47 sind zudem so beschaffen, dass die Grenzwerte 55 für die Qualitätsparameter 36 und/oder die den Qualitätsparametern 36 zugeordneten Qualitätskriterien 49a ... 49i definiert werden und die Grenzwerte 55 in den entsprechenden Assistenzsystemen 32a ... 32n hinterlegt sind oder von dem Prozesssupervisor 47 an diese übergeben werden.

Ist nun der Verwendungszweck 45 der hinterlegten Prozessstrategien 34a ... 34n auf die Verwendung des Erntegutes 16 als erntefrisches Erntegut 16 oder als Silage 53 für die Biogasgewinnung 51 gerichtet kann ein Qualitätsparameter 36 das Qualitätskriterium Feuchte 49h umfassen, wobei für die Feuchte 49h ein Wertebereich von 55% bis 70 % vorgegeben ist, sodass das Erntegut 16 einen für die Vergärung optimalen Trockenmassegehalt von 30% bis 45% aufweist. Weiter kann ein Arbeitsparameter 35 die Schnittlänge des Erntegutes 16 sein, wobei die Schnittlänge in einem Bereich von 40 mm bis 70 mm liegen sollte, da bei diesen Schnittlängen eine optimale bakterielle Umsetzung des Erntegutes 16 in Biogas sichergestellt wird. Zudem ergibt sich bei diesen Schnittlängen eine homogene Substratmenge. Ein weiterer Arbeitsparameter 35 kann in diesem Zusammenhang der Schnittzeitpunkt sein, wobei der Schnittzeitpunkt so gewählt wird, dass eine hohe Energiekonzentration im Erntegut 16 sichergestellt wird, eine hohe Verdichtung des Erntegutes 16 möglich und die Vermeidung von Fehlgärungen erreicht wird. Zudem kann ein Arbeitsparameter 35 die Schnitthöhe eines Mähwerks 15 umfassen, wobei die Schnitthöhe in einem Bereich von 50 mm bis 80 mm vorgeschlagen wird, sodass ein niedriger Verschmutzungsgrad des Erntegutes 16 sichergestellt und zugleich das Beschädigen der Grasnarbe vermieden wird.

Ist der Verwendungszwecke 45 der hinterlegten Prozessstrategien 34a ... 34n auf die Verwendung des Erntegutes 16 als erntefrisches Erntegut 16 oder als Silage 53 für die Tierfütterung 52 gerichtet, insbesondere die Rindermast und die Milchgewinnung, umfasst der Qualitätsparameter 36 das Qualitätskriterium Feuchte 49h und wobei für die Feuchte 49h ein Wertebereich von 55% bis 70 % vorgegeben ist, ein Arbeitsparameter 35 die Zugabe einer Menge Siliermittel umfasst, die die Bildung von Milchsäure fördert, ein Arbeitsparameter 35 die Schnittlänge des Erntegutes 16 ist und die Schnittlänge in einem Bereich von 40 mm bis 70 mm liegt, wobei die Schnittlänge umso kürzer vorgeschlagen wird je nasser das Erntegut 16 ist, ein Arbeitsparameter 35 die Schnitthöhe eines Mähwerks 15 umfasst und die Schnitthöhe in einem Bereich von 50 mm bis 80 mm vorgeschlagen wird. In diesem Zusammenhang ist es von Vorteil, wenn der Trockenmassegehalt des Erntegutes 16 ermittelt wird, vorzugsweise durch Analyse des Erntegutes 16 und die Zugabe der Menge an Siliermittel in Abhängigkeit vom Trockenmassegehalt erfolgt, wobei vorzugsweise für einen optimalen Trockenmassegehalt eine optimale Anwelkzeit ermittelt wird.

Ist der Verwendungszwecke 45 der hinterlegten Prozessstrategien 34a ... 34n auf die Verwendung des Erntegutes 16 als Heu gerichtet umfasst der Qualitätsparameter 36 das Qualitätskriterium Feuchte 49h und wobei für die Feuchte 49h ein Maximalwert von 15% vorgegeben ist.

Zudem kann das jeweilige Assistenzsystem 32a ... 32n so strukturiert sein, dass es im Zuge der Optimierung der durchzuführenden Teilbearbeitungsprozesse 2 das Weglassen oder Wiederholen von Teilbearbeitungsprozessen 2 vorschlägt, etwa das Wiederholen oder Weglassen des Teilbearbeitungsprozesses 2 Wenden 4 des Erntegutes 16 und/oder das Weglassen des Crackens des Erntegutes 16 im Teilbearbeitungsprozess 2 Mähen 3 umfasst, wenn zumindest das Qualitätskriterium Feuchte 49h entweder noch nicht oder bereits in einem zulässigen Bereich liegt.

Wie bereits beschrieben wird der Verschmutzungsgrad des Erntegutes 16 insbesondere dadurch niedrig gehalten, wenn die Optimierung der Arbeitsparameter 35 die Optimierung der Rechhöhe in den Teilbearbeitungsprozessen 2 Wenden 4 und Schwaden 5 umfasst und die Rechhöhe umso höher vorgeschlagen wird, je schlechter das Qualitätskriterium Verschmutzungsgrad 49g ist.

Wie ebenfalls bereits beschrieben wird der Verschmutzungsgrad des Erntegutes 16 auch dadurch niedrig gehalten, dass die Optimierung der Arbeitsparameter 35 Schnitthöhe und Schnittzeitpunkt im Teilbearbeitungsprozess 2 Mähen 3 zumindest in Abhängigkeit von einem oder mehreren der Qualitätskriterien 49 Verschmutzungsgrad 49g und Feuchte 49h erfolgt, wobei die Schnitthöhe umso höher und der Schnittzeitpunkt umso später gewählt wird je schlechter die Qualitätskriterien 49 Verschmutzungsgrad 49g und Feuchte 49h sind.

Weiter ist der Prozesssupervisor 47 so beschaffen, dass er eine Änderung von Qualitätsparametern 36 und zugehörigen Qualitätskriterien 49 einer aktivierten Prozessstrategie 34a ... 34n oder einen Wechsel einer aktivierten Prozessstrategie 34a ... 34n vorschlägt, wenn dieser oder das betreffende Assistenzsystem 32a ... 32n erkennt bzw. erkennen, dass die Qualitätsparameter 36 und/oder die jeweils zugeordneten Qualitätskriterien 49 einer gewählten Prozessstrategie 34a ... 34n nicht erreichbar sind, insbesondere bei Maschinenausfall und/oder einer bevorstehender Schlechtwetterphase.

Zudem ist der Prozesssupervisor 47 eingerichtet in Abhängigkeit von Bedingungen eines vorhergehenden Teilbearbeitungsprozesses 2 Art und Umfang der folgenden Teilbearbeitungsprozesse 2 der aktivierten Prozessstrategie 34a... 34n zu definieren.

### Bezugszeichenliste

| | | | |
|---|---|---|---|
| 1 | Landwirtschaftliches System | 32a-32n | Assistenzsystem |
| 2 | Teilbearbeitungsprozess | 33 | Nutzer |
| 3 | Mähen | 34a-34n | Strategie |
| 4 | Wenden/Zetten | 35 | Arbeitsparameter |
| 5 | Schwaden | 36 | Qualitätsparameter |
| 6 | Schwadernte mittels Feldhäcksler | 37 | Bedieneinrichtung |
| 7 | Schwadernte mittels Ballenpresse | 38 | Eingabe- und Anzeigeeinheit |
| 8 | Aufsammeln u. Abtransport der Ballen | 39a | Speichereinheit |
| 9 | Schwadernte mittels Ladewagen | 39b | DV-Einheit |
| 10 | Einlagerung Erntegut | 40 | stationäre Einheit |
| 11 | landwirtschaftliche Arbeitsaufgabe | 41 | Daten |
| 12 | Erntestart | 42 | interne Datenquelle |
| 13 | Futtermittelernteprozesskette | 43 | externe Datenquelle |
| 14 | Traktor | 44 | Datencloud |
| 15 | Mähwerk | 45a-45n | Regelautomat |
| 16 | Erntegut | 46 | Sensoranordnung |
| 17 | Erntegutschwad | 47 | Prozesssupervisor |
| 18 | Breitablage | 48 | Kommunikationsmittel |
| 19 | Feldboden | 49a-49i | Qualitätskriterien |
| 20 | Heuwerbungsmaschine | 50 | Verwendungszweck |
| 21 | Schwader | 51 | Biogasgewinnung |
| 22 | Feldhäcksler | 52 | Tierfütterung |
| 23 | Transportwagen | 53 | Silage |
| 24 | Ladewagen | 54 | Entscheidungskriterium |
| 25 | Ballenpresse | 55 | Grenzwert |
| 26 | Erntegutballen | 56 | Einlagerung |
| 27 | Pritschenwagen | I_{A} | Ausgangsdaten |
| 28 | Hubstabler | I_{E} | Eingangsdaten |
| 29 | Silo | I_{Ext} | Externe Daten |
| 30 | Verdichtungsfahrzeug | | |
| 31 | landwirtschaftliche Arbeitsmaschine | | |

## Patentansprüche

1. Landwirtschaftliches System (1) zur Ausführung einer Futtermittelernteprozesskette (13), umfassend:
- zumindest eine landwirtschaftliche Arbeitsmaschine (31) zur Durchführung eines spezifischen Teilbearbeitungsprozesses (2) eines Gesamtbearbeitungsprozesses der Futtermittelernteprozesskette (13),
- ein jeder Arbeitsmaschine (31) zugeordnetes Assistenzsystem (32a ... 32n) zur Ansteuerung der jeweiligen Arbeitsmaschine (31), welches eine Speichereinheit (39a) zum Hinterlegen von Daten (41) und eine Datenverarbeitungseinheit (39b) zur Verarbeitung der in der Speichereinheit (39a) hinterlegten Daten (41) aufweist, **dadurch gekennzeichnet, dass** das jeweilige Assistenzsystem (32a ... 32n) mit der jeweiligen zur Durchführung der Teilbearbeitungsprozesse (2) vorgesehenen Arbeitsmaschine (31) und/oder deren Arbeitsorganen jeweils einen eigenständig arbeitenden Regelautomaten (45a ... 45n) bildet, welcher der Optimierung der Ansteuerung der jeweiligen Arbeitsmaschine (31) zur Durchführung des spezifischen Teilbearbeitungsprozesses (2) dient, wobei das System (1) einen Prozesssupervisor (47) als übergeordnete Regelungseinheit der Regelautomaten (45a ... 45n) umfasst, welcher die einzelnen Regelautomaten (45a ... 45n) ansteuert und dass die Assistenzsysteme (32a ... 32n) der Regelautomaten (45a ... 45n) zum Datenaustausch untereinander durch ein Kommunikationsmittel (48) mit dem Prozesssupervisor (47) verbunden sind.

2. Landwirtschaftliches System (1) nach Anspruch 1, **dadurch gekennzeichnet, dass** der Prozesssupervisor (47) dazu eingerichtet ist, den Gesamtbearbeitungsprozess des Systems (1) gemäß einer hinterlegten oder hinterlegbaren Prozessstrategie (34a ... 34n) durch eine aufeinander abgestimmte Ansteuerung einzelner oder aller Regelautomaten (45a ... 45n) autonom zu optimieren.

3. Landwirtschaftliches System (1) nach Anspruch 1 oder 2, **dadurch gekennzeichnet, dass** zur Durchführung eines jeweiligen Teilbearbeitungsprozesses (2) mehrere unterschiedliche Prozessstrategien (34a ... 34n) hinterlegt oder hinterlegbar sind, welche der jeweilige Regelautomat (45a ... 45n) der jeweiligen Arbeitsmaschine (31), die zur Durchführung des jeweiligen Teilbearbeitungsprozesses (2) ausgeführt und eingerichtet ist, heranzieht.

4. Landwirtschaftliches System (1) nach einem der Ansprüche 1 bis 3, **dadurch gekennzeichnet, dass** zur Steuerung einer Aktivierung und Ansteuerung einzelner Regelautomaten (45a ... 45n) und/oder eines Datenaustauschs zumindest einzelner Regelautomaten (45a ... 45n) untereinander durch den Prozesssupervisor (47) zumindest eine Regelung hinterlegt ist, welche bestehende Abhängigkeiten zwischen Einstellparametern und Qualitätsparametern (36) der verschiedenen Teilbearbeitungsprozesse (2) untereinander umfasst.

5. Landwirtschaftliches System (1) nach einem der vorangehenden Ansprüche, **dadurch gekennzeichnet, dass** der Prozesssupervisor (47) zur autonomen Vorgabe von Einstellgrenzen eingerichtet ist, innerhalb derer der jeweilige Regelautomat (45a ... 45n) die jeweilige Arbeitsmaschine (31) ansteuert.

6. Landwirtschaftliches System (1) nach einem der vorangehenden Ansprüche, **dadurch gekennzeichnet, dass** der Prozesssupervisor (47) zur autonomen Vorgabe von Zielwerten der Qualitätsparameter (36) eingerichtet ist, innerhalb derer der jeweilige Regelautomat (45a ... 45n) die jeweilige Arbeitsmaschine (31) ansteuert.

7. Landwirtschaftliches System (1) nach einem der vorangehenden Ansprüche, **dadurch gekennzeichnet, dass** zur Abbildung funktionaler Zusammenhänge eines von einer der Arbeitsmaschinen (31) durchzuführenden Teilbearbeitungsprozesses (2) zumindest einem der Qualitätsparameter (36) zumindest ein adaptives Kennlinienfeld zugeordnet ist und dass dieser mindestens eine Qualitätsparameter (36) als Ausgangsgröße (I_{A}) des zumindest einen Kennfeldes definiert ist.

8. Landwirtschaftliches System (1) nach einem der vorangehenden Ansprüche, **dadurch gekennzeichnet, dass** die von dem Prozesssupervisor (47) angesteuerten Regelautomaten (45a ... 45n) als Mähmaschinenautomaten (45a), Wendemaschinenautomaten (45b), Schwadmaschinenautomaten (45c), Erntemaschinenautomaten (45d), Transportfahrzeugautomaten (45e) und Ballenpressenautomaten (45f) ausgeführt und eingerichtet sind.

9. Landwirtschaftliches System (1) nach einem der vorangehenden Ansprüche, **dadurch gekennzeichnet, dass** der Prozesssupervisor (47) zumindest eine Bedieneinrichtung (37) umfasst, wobei die Bedieneinrichtung (37) von zumindest einer Eingabe- und Anzeigeeinheit (38) und der Speicher- und Datenverarbeitungseinheit (39a, 39b) gebildet ist, wobei die Bedieneinrichtung (37) einer oder mehreren der landwirtschaftlichen Arbeitsmaschinen (31) und/oder einer stationären Einheit (40) zugeordnet ist.

10. Landwirtschaftliches System (1) nach einem der vorangehenden Ansprüche, **dadurch gekennzeichnet, dass** die Teilbearbeitungsprozesse (2) des Futtermittelernteprozesses (13) einen oder mehrere Prozessschritte aus der Gruppe Entscheidung Erntestart (12), Mähen (3) des Erntegutes (16), Wenden (4) des Erntegutes (16), Schwaden (5) des Erntegutes (16), Schwadernte mittels Feldhäcksler (6), Schwadernte mittels Ballenpresse (7), Schwadernte mittels Ladewagen (9), Aufsammeln und Abtransport von Erntegutballen (8) sowie die Einlagerung (10) von Erntegut (16) umfassen.

11. Landwirtschaftliches System (1) nach einem der vorangehenden Ansprüche, **dadurch gekennzeichnet, dass** die landwirtschaftlichen Arbeitsmaschinen (31) des Systems (1) in Abhängigkeit von den jeweils erforderlichen Teilbearbeitungsprozessen (2) Mähmaschinen, vorzugsweise Mähwerke (15), Heuwerbungsmaschinen (20), vorzugsweise Heuwender, Schwadmaschinen, vorzugsweise Schwader (21), Erntemaschinen, vorzugsweise Feldhäcksler (22), Ballenpressen (25) und/oder Ladewagen (24), Transportfahrzeuge, vorzugsweise Traktoren (14), Transportwagen (23), Pritschenwagen (27), Hubstapler (28) und Verdichtungsfahrzeuge (30) sind, und dass das System (1) Einlagerungsmedien für das Erntegut (16) umfasst, insbesondere Silos (29) und in Gestalt von Erntegutballen (26).

12. Landwirtschaftliches System (1) nach einem der vorangehenden Ansprüche, **dadurch gekennzeichnet, dass** die Assistenzsysteme (32a ... 32n) dazu eingerichtet sind, die in den Assistenzsystemen (32a ... 32n) hinterlegten Prozessstrategien (34a ... 34n) zur Auswahl vorzuschlagen und/oder das Prozessstrategien (34a ... 34n) durch eine Bedienperson (33) vorgebbar sind, wobei die hinterlegten Prozessstrategien (34a ... 34n) auf den jeweiligen Verwendungszweck (50) des Erntegutes (16) gerichtet sind.

13. Landwirtschaftliches System (1) nach einem der vorangehenden Ansprüche, **dadurch gekennzeichnet, dass** jede der Prozessstrategien (34a ... 34n) einen oder mehrere Qualitätsparameter (36) umfasst, wobei jeder der Qualitätsparameter (36) das Arbeitsergebnis des jeweiligen Teilbearbeitungsprozesses (2) des Futtermittelernteprozesses (13) definiert und eines oder mehrere der Qualitätskriterien (49)
- Kraftstoffbedarf (49a), vorzugsweise ein minimaler Kraftstoffbedarf,
- Durchsatz (49b), vorzugsweise ein maximaler Durchsatz,
- Gesamtkosten (49c), vorzugsweise minimale Gesamtkosten,
- Erntegutqualität (49d), vorzugsweise eine maximale Erntegutqualität,
- Erntegutverlust (49e), vorzugsweise ein minimaler Erntegutverlust,
- Energiegehalt (49f) des Erntegutes (16), vorzugsweise ein maximaler Energiegehalt,
- Verschmutzungsgrad (49g), vorzugsweise ein minimaler Verschmutzungsgrad,
- Feuchte (49h) des Erntegutes (16), vorzugsweise eine an den Verwendungszweck (50) angepasste optimierte Feuchte,
- Erntegutertrag (49i), vorzugsweise ein maximaler Erntegutertrag umfasst.

14. Landwirtschaftliches System (1) nach einem der vorangehenden Ansprüche, **dadurch gekennzeichnet, dass** der Verwendungszweck (50) der hinterlegten Prozessstrategien (34a ... 34n) die Verwendung des Erntegutes (16) als erntefrisches Erntegut (16) oder als Silage (53) für die Tierfütterung (52), insbesondere die Rindermast und die Milchgewinnung ist, und wobei das Qualitätskriterium Feuchte (49h) zwischen 55 und 70 % liegt, ein Arbeitsparameter (35) die Zugabe einer Menge Siliermittel umfasst, die die Bildung von Milchsäure fördert, ein Arbeitsparameter (35) die Schnittlänge des Erntegutes (16) ist und die Schnittlänge in einem Bereich von 40 mm bis 70 mm liegt, wobei die vorschlagsgemäße einzustellende Schnittlänge umso kürzer ist, je nasser das Erntegut (16) ist, ein Arbeitsparameter (35) die Schnitthöhe eines Mähwerks (15) umfasst und die die vorschlagsgemäße einzustellende Schnitthöhe in einem Bereich von 50 mm bis 80 mm beträgt.

15. Verfahren zum Betreiben eines landwirtschaftlichen Systems (1) zur Ausführung einer Futtermittelernteprozesskette (13),
- wobei durch zumindest eine landwirtschaftliche Arbeitsmaschine (31) spezifische Teilbearbeitungsprozesse (2) eines Gesamtbearbeitungsprozesses der Futtermittelernteprozesskette (13) durchgeführt werden,
- wobei die jeweilige Arbeitsmaschine (31) durch ein dieser zugeordnetes, eine Speichereinheit (39a) zum Hinterlegen von Daten (41) und eine Datenverarbeitungseinheit (39b) zur Verarbeitung der in der Speichereinheit (39a) hinterlegten Daten (41) aufweisendes Assistenzsystems (32a ... 32n) angesteuert wird, **dadurch gekennzeichnet, dass** durch das jeweilige Assistenzsystem (32a ... 32n) mit der jeweiligen zur Durchführung der Teilbearbeitungsprozesse (2) vorgesehenen Arbeitsmaschine (31) und/oder deren Arbeitsorganen jeweils ein eigenständig arbeitender Regelautomat (45a ... 45n) gebildet wird, durch welchen die Ansteuerung der Arbeitsmaschinen (31) zur Durchführung des Teilbearbeitungsprozesses (2) optimiert wird, wobei das System (1) einen Prozesssupervisor (47) als übergeordneter Regelungseinheit der Regelautomaten (45a ... 45n) aufweist, durch den die einzelnen Regelautomaten (45a ... 45n) angesteuert werden und dass zum Datenaustausch der Regelautomaten (45a ... 45n) untereinander die Assistenzsysteme (32a ... 32n) durch ein Kommunikationsmittel (48) mit dem Prozesssupervisor (47) verbunden werden.
